# EUROPEAN PATENT SPECIFICATION

(11) **EP 2 557 471 B1**
(45) Date of publication and mention of the grant of the patent: **05.03.2014**
(21) Application number: 11006630.5
(22) Date of filing: 12.08.2011
(51) Int. Cl.: G05D 16/06, F24D 19/10

(54) **Valve for controlling the differential pressure in heating and cooling systems**
Ventil zur Steuerung des Differenzdrucks in Heiz- und Kühlsystemen
Soupape de contrôle de la pression différentielle dans les systèmes de chauffage et de refroidissement

(43) Date of publication of application: 13.02.2013
(73) Proprietor: Brandoni S.p.A., 28078 Romagnano Sesia (NO) (IT)
(72) Inventor: Galetti, Renato, 28078 Romagnano Sesia (NO) (IT)
(74) Representative: Valentini, Giuliano

(56) References cited:
- DE-A1- 10 256 021
- GB-A- 1 401 614
- US-A- 1 746 055
- US-A- 3 917 164
- US-A- 3 930 518
- US-A- 5 178 324
- US-A1- 2002 195 148

## Description

The present invention relates to a valve for controlling the pressure in heating and cooling systems and, in particular a valve for controlling the differential pressure between the supply and return branches of an appliance installed in these types of system.

Heating and cooling systems are generally constituted by several distinct sections (appliances) for each of which the circulation of a heat-carrying fluid must be guaranteed, maintaining the desired flow rate and pressure values in the supply and return branches.

In general, to obtain the pressure control and flow rate control functions two distinct valves are used, in particular a first valve, connected for example along the supply branch, to control the flow rate and shut-off the fluid if required, and a second valve, connected for example along the return branch, to control the pressure difference of the fluid between the supply and return branches. To interact, the two valves must be hydraulically connected to each other, for example by a capillary duct.

It is evident that the use of two valves installed on the branches connecting each appliance to the system can constitute a problem, above all if the valves are installed in positions at a distance from each other.

Moreover, the necessary flow rate and pressure settings using two separate valves for each appliance can prove difficult, as can measuring and/or regulating effective operating parameters of the appliance in operating conditions.

US-A-3917164 discloses an automatic apparatus for regulating humidity and temperature, in which a constant flow valve is provided for the automatic adjustment of the differential pressure. The valve includes a diaphragm which acts on a shutter to regulate the flow between input and output as a function of the pressure difference detected between the two branches. The pressure on one of the two branches of the system is detected at the valve outlet for the regulation of the temperature through an external conduit, while on the other branch is detected directly on the diaphragm.

US-A-5178324 discloses a differential pressure valve for regulating the flow of a heating fluid in the branches of a plant comprising a plurality of radiators. A membrane is connected with a bellows which automatically obstructs or frees the section of passage of the fluid through slots or holes as function of the pressure difference between the two branches of the system. A cylindrical shutter can also be manually operated via an external knob to set the desired flow section of the fluid through the channels.

This being stated, an object of the present invention is to propose a valve for controlling the differential pressure which makes it possible to reduce operations and installation times on each appliance of the system.

Another object of the present invention is to propose a valve of the aforesaid type which makes it possible to facilitate operations for measuring, regulating and/or shutting off the fluid supplied to each appliance.

These objects are achieved by the present invention through a valve according to claim 1. Further characteristics and advantages of the present invention are indicated in the respective dependent claims.

The solution proposed by the present invention consists of a valve which allows to combine, in a single device, all the functions to regulate the flow rate and differential pressure, and that of shutting off the fluid, which are generally performed by two distinct valves.

Therefore, there is provided a valve which makes it possible to automatically control the differential pressure of a fluid between the supply branch and the return branch of an appliance installed in heating and cooling systems. The valve comprises a valve body having at least one inlet channel and at least one outlet channel of the fluid, separated by a valve seat, and a valve member constrained to a stem. The valve member is movable between at least one open position, in which the valve member is at a distance from the valve seat, and a closed position in which the valve member abuts against the valve seat.

The valve comprises at least one actuator device, arranged inside the valve body, to move the valve member and vary the flow rate of fluid through the valve in such a manner as to maintain constant a preset value of the differential pressure between the supply branch and the return branch of the appliance.

The chamber in which the valve member moves is hydraulically connected to the inlet channel of the fluid by a by-pass duct obtained in the stem of the valve member.

The by-pass duct makes it possible to compensate the differences in pressure between the upper and lower face of the valve member. In practice, this makes it possible to improve the regulation precision, eliminating any forces acting on the stem besides those applied to the membrane.

In this way, it is possible to control the differential pressure between the supply and return branches by acting on the regulation of the flow rate of fluid passing through the valve.

The installation times and costs of a single valve, in place of two, for each appliance served by the system are thereby reduced. In the same way, the times and costs required to perform regulation operations are also reduced, as the functions to control the pressure and the flow rate and the shut-off function are performed by a single valve for each appliance.

The actuator device preferably includes an elastic membrane which is housed in a chamber of the valve body and is connected to the valve member stem. In this way a direct mechanical connection is produced between the section for controlling the differential pressure and the section for controlling the flow rate.

The membrane divides the chamber into two parts: a first part is hydraulically connected to the outlet channel through a duct obtained inside the valve body and a second part is hydraulically connected to the opposite branch for connection of the appliance, relative to the one along which the valve is installed, through a capillary duct external to the valve body.

Besides the pressures of the fluid present in the two parts into which the chamber is divided, there is also provided at least one spring which acts on the membrane. By regulating the preload of the spring by appropriate means which can be operated externally, it is possible to set the desired value of the differential pressure which must be maintained between the supply branch and the return branch of the appliance. The means for regulating the preload of the spring preferably include at least one indicator of the value of the differential pressure set.

There are also provided means to regulate the maximum flow rate position of the valve member, in turn comprising an indicator of this position. An adjustable stop makes it possible to memorize the maximum flow rate position set for the valve member.

When the valve member is instead taken to the closed position, and therefore abutting against the corresponding valve seat, the flow rate of fluid between the inlet channel and the outlet channel of the valve is interrupted, thereby allowing the valve to also perform the shut-off function when it is necessary to exclude the appliance from circulation of the fluid in the system.

The valve member moves inside a chamber obtained in the valve body and delimited in part by the valve seat against which the valve member abuts. The chamber in which the valve member moves is hydraulically connected to the fluid inlet channel by a duct obtained in the valve body.

In particular, the by-pass duct includes at least one axial duct obtained inside the stem of the valve member, and also radial ducts to hydraulically connect the axial duct to the inlet channel and to the chamber. There are advantageously provided means to vary the section for fluid flow through the radial ducts which lead into the chamber in order to improve regulation precision.

The valve is preferably provided with at least one measurement port hydraulically connected to the inlet channel and at least one measurement port hydraulically connected to the outlet channel. This makes it possible to facilitate the necessary pressure and temperature measurements of the fluid, and also to obtain through these measurements a flow rate value, during the steps to calibrate the valve installed for each appliance of the system.

Further characteristics and advantages of the present invention will be more apparent from the description below, provided by way of non-limiting example with reference to the accompanying drawings, wherein:
- Figure 1A is a diagram representing an appliance installed in a heating or cooling system according to prior art;
- Figure 1B is a diagram representing installation of a single valve according to the present invention in a system such as that of Figure 1A;
- Figure 2 is a sectional view of an embodiment of a valve according to the present invention in the regulating condition;
- Figure 3 is a sectional view of the valve of Figure 2 in open condition; and
- Figure 4 is a sectional view of the valve of Figure 2 in closed condition.

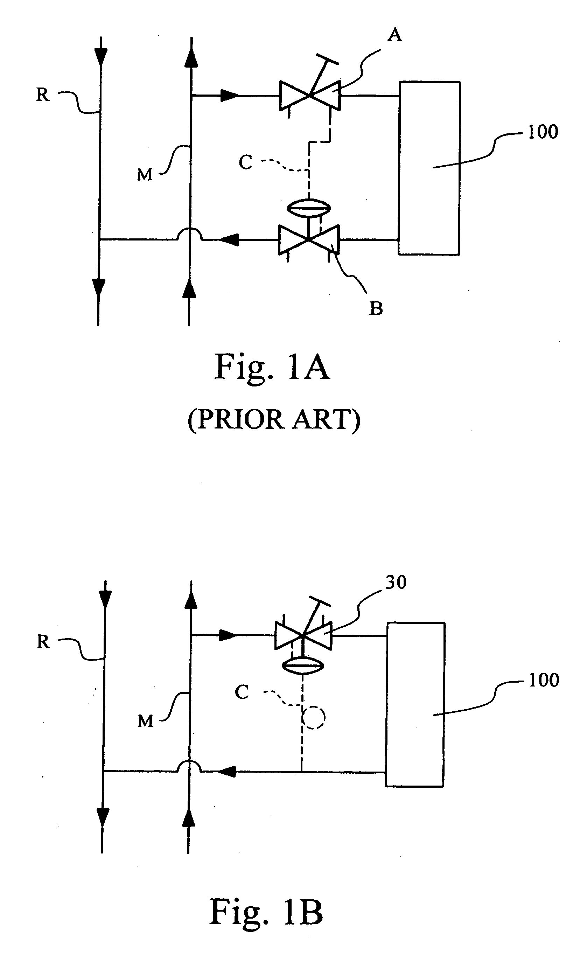

Figure 1A represents the portion of a prior art system, with supply M and return R ducts, to which an appliance 100 is connected, for example one or more radiators in the case of a heating system, or one or more fan coils in the case of a cooling system. Connection of the appliance 100 to the system is produced by a valve A for controlling the flow rate installed on the supply branch and a valve B for controlling the differential pressure installed on the return branch. The two valves A and B interact with each other by a hydraulic connection C, produced for example using a capillary duct.

Figure 1B instead represents the same portion of system in which the appliance 100 is connected to the system by a valve 30 according to the present invention, in which control of the differential pressure is produced by regulating the flow rate. The valve 30, installed on the supply branch M, thus integrates both functions performed by the two distinct valves A and B of prior art in a single valve. The section for controlling the differential pressure in the valve 30 is hydraulically connected to the other branch by a capillary duct C.

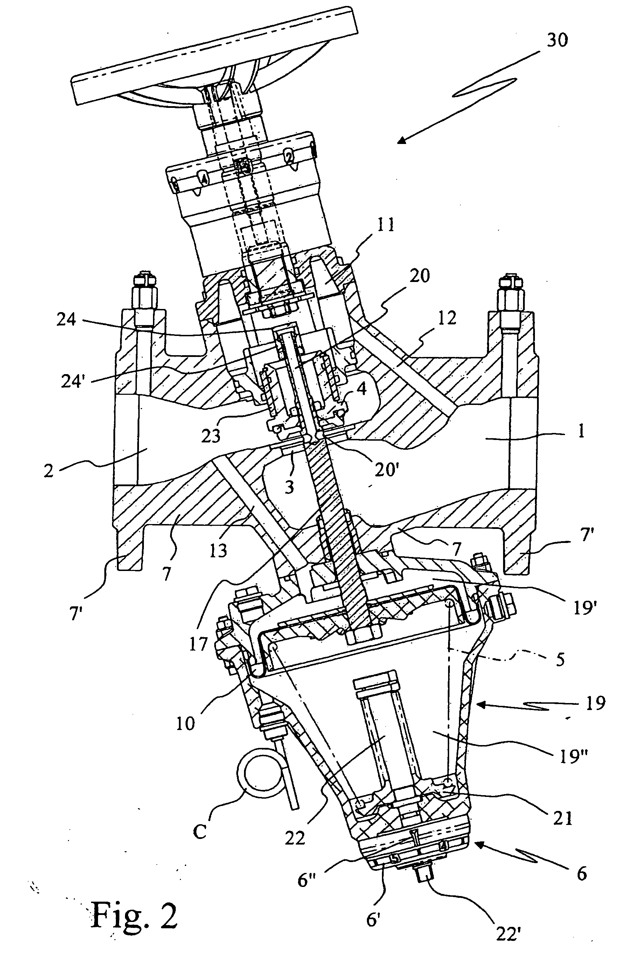

Figure 2 illustrates a valve 30 according to the present invention in the regulating condition. The valve 30 includes a valve body 7 which has an inlet channel 1 and an outlet channel 2 provided with flanged elements 7' for connection to the pipes of the system.

A valve seat 3 obtained in the valve body 7 and a movable valve member 4 allow variation of the section for fluid flow through the valve, i.e. throttling of the fluid flow rate between the inlet channel 1 and the outlet channel 2.

The valve member 4 is mounted on a stem 17 and is movable inside a chamber 11, delimited at the bottom by the valve seat 3. The chamber 11 is connected to the inlet channel 1 by a duct 12 obtained in the valve body 7.

Movement of the valve member 4 is controlled by a membrane 10 connected mechanically to the stem 17. The membrane 10 is housed in a chamber 19 and divides it into two parts 19' and 19" which are connected respectively with the outlet channel 2 by a duct 13 and with the return branch (R in Fig. 1B) by a capillary duct C.

The pressure of the supply branch caused by the fluid in the part 19', the pressure of the return branch caused by the fluid in the part 19" and, in addition, the thrust of at least one spring 5 (represented schematically with a dot-dash line) housed in the part 19" of the chamber 19 act on the membrane 10; the thrust of the spring 5 determines the pressure difference that the valve must maintain between the supply and return branches.

The thrust exerted by the spring 5, and therefore the differential pressure to be set, can be modified by acting on a screw 22 to vary the position of a disk 21 for supporting the spring 5 and, consequently, the preload of this spring. The screw 22 includes an end 22' of appropriate section which projects externally to the valve body 7 and can be rotated using a specific tool.

An indicator 6 rotates integral with the screw 22 and includes a numbered scale 6' whose value can be read at a reference 6". The value thus provided by the indicator 6 allows the value of the differential pressure set to be obtained using a suitable conversion table.

To improve the regulation precision, there is provided a by-pass duct, obtained in the stem 17, for hydraulic connection of the chamber 11 in which the valve member 4 is housed and the inlet channel 1.

In fact, the stem 17 has an axial duct 20 and at least one transverse duct 20' which intersects the axial duct 20 below the valve member 4. Above the valve member 4, the axial duct 20 is closed by a cap 24 screwed onto the top of the stem 17 and locked in position by a counter nut. The cap 24 is provided with one or more radial bores 24' which hydraulically connect the axial duct 20 with the chamber 11. The assembly of bores 20, 20' and 24' thus produce a by-pass hydraulic connection between the inlet channel 1 and the upper chamber 11 in which the valve member 4 is housed movably.

The by-pass duct makes it possible to compensate the pressure differences that occur between the upper face and the lower face of the valve member, in order to eliminate the undesirable forces that act on the stem 17, as these undesirable forces would be extraneous to those applied to the membrane 10.

The amount of by-pass effect can be calibrated by tightening or loosening the cap 24 relative to the stem 17, thereby varying the distance of the cap 24 relative to the top of the stem 17, in such a manner as to vary the section for fluid flow through the radial bores 24'. To further improve the regulation precision and eliminate further undesirable forces, the valve member 4 slides on a guide 23 made of a material with low coefficient of friction and not subject to limescale deposits, such as PTFE or other materials having similar characteristics.

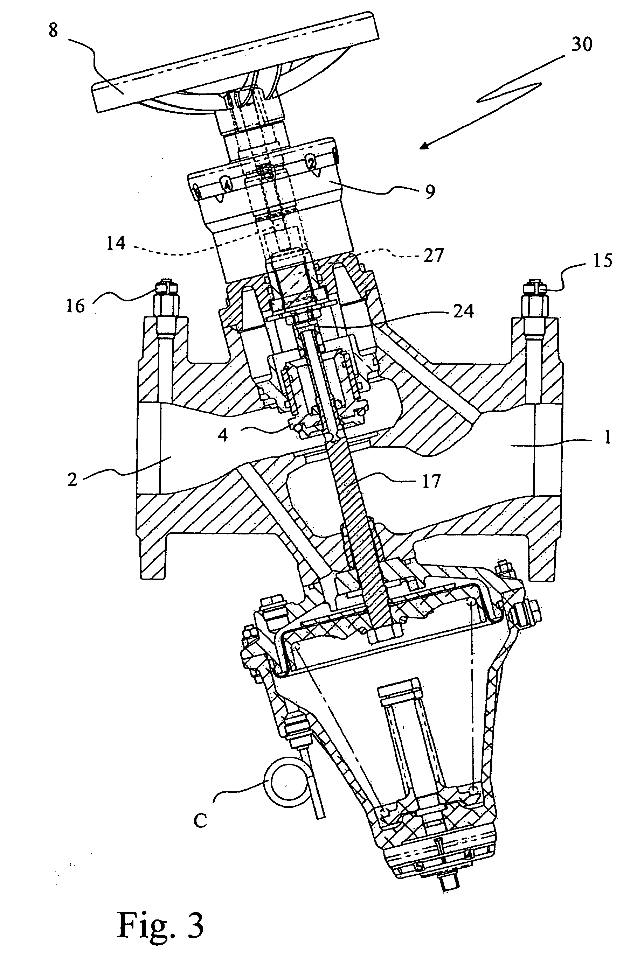

In Figure 3 the valve 30 is represented in fully open condition. The fully open position of the valve member 4 can be regulated by acting on the axial position of a screw 27 operated by a handwheel 8.

The position of the screw 27 determines the fully open position of the valve member 4 by mechanical abutment with the top of the cap 24 integral with the stem 17. After reaching the desired position, this can be memorized by tightening a threaded pin 14 until taken to abut against the screw 27. The memorized position is thus maintained regardless of further movements of the handwheel 8 and/or of the screw 27.

It is possible to measure the flow rate of the fluid passing through the valve 30 for any operating condition, i.e. for any stable position of the valve member 4 included between the fully open position and the closed position.

By acting on the control handwheel 8, the screw 27 is taken into contact with the cap 24 integral with the stem 17. This contact is indicated by an increase in the pressure difference between the inlet channel 1 and the outlet channel 2 of the valve 30. The pressure difference can be easily measured using a suitable measurement instrument which is connected to the specific measurement ports 15 and 16 connected respectively to the inlet and outlet channels 1 and 2.

In this condition, the pressure difference is measured and the position of the numbered indicator 9 connected to the handwheel 8 is read; knowing these two data, it is possible to obtain the flow rate of the fluid passing through the valve 30 in this operating condition by specific diagrams or using a specific electronic instrument.

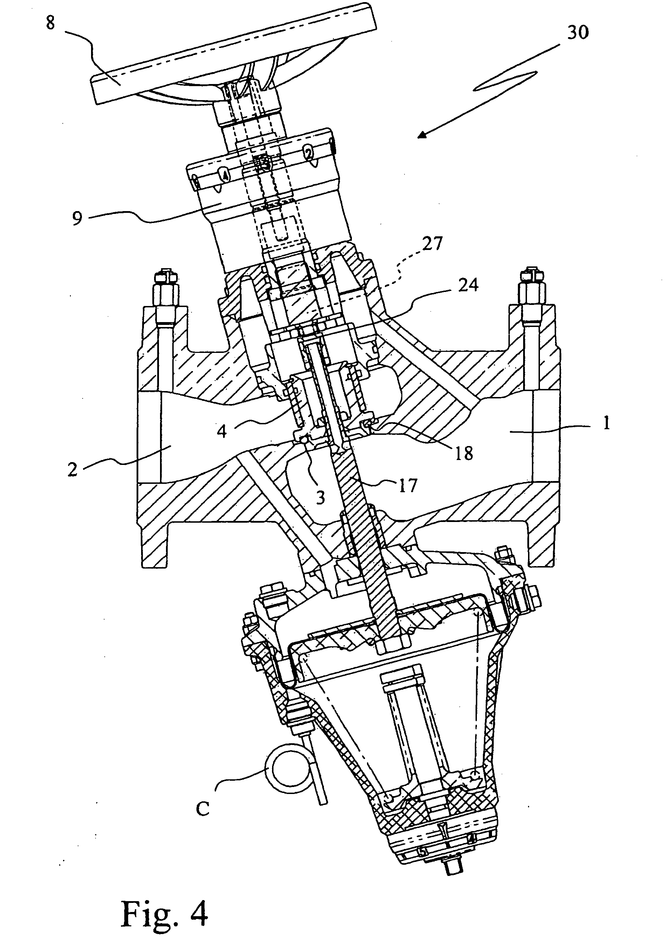

In Figure 4 the valve is represented in closed condition. The valve member 4 is taken to the closed position by acting on the handwheel 8 until the screw 27 is taken to abut against the cap 24 integral with the stem 17. Continuing rotation of the handwheel 8, the valve member 4 integral with the stem 17 is brought into contact with the valve seat 3 producing complete closing of the valve 30, and consequently interruption of the flow, by means of the gasket 18. The position of the valve member 4 in the condition with the valve closed is indicated by the numbered scale of the position indicator 9.

## Claims

1. A valve (30) for controlling the differential pressure of a fluid between the supply branch (M) and the delivery branch (R) of an appliance (100) installed in heating and cooling systems, comprising a valve body (7) having at least one inlet channel (1) and at least one outlet channel (2) of the fluid separated by a valve seat (3),
a valve member (4) constrained to a stem (17) and movable between at least one open position, in which the valve member (4) is at a distance from the valve seat (3), and a closed position in which the valve member (4) abuts against said valve seat (3), and at least one actuator device (10), arranged inside said valve body (7), to move said valve member (4) and vary the flow rate of fluid through the valve (30) in order to maintain constant a preset value of the differential pressure between the supply branch (M) and the return branch (R) of said appliance (100), **characterized in that** said valve member (4) is movable inside a chamber (11) obtained in said body, and **in that** at least one by-pass duct (20, 20', 24') obtained in the stem (17) of said valve member (4) is provided to hydraulically connect said chamber (11) to said fluid inlet channel (1).

2. The valve (30) according to claim 1, wherein said actuator device includes an elastic membrane (10) housed in a chamber (19) of said valve body (7) and connected to the stem (17) of said valve member (4).

3. The valve (30) according to claim 2, wherein said membrane (10) divides said chamber (19) into two parts (19', 19"), a first part (19') being hydraulically connected to said outlet channel (2) through a duct (13) obtained inside said valve body (7) and a second part (19") being hydraulically connected to the return branch (R) through a capillary duct (C) external to said valve body (7).

4. The valve (30) according to claim 1, wherein there is provided at least one spring (5) acting on said membrane (10) and means (22, 22') for regulating the preload of said spring (5) so as to set the desired value of the differential pressure between the supply branch (M) and the return branch (R) of said appliance (100).

5. The valve (30) according to claim 4, wherein said means for regulating the preload of said spring (5) include at least one indicator (6, 6', 6") of the value of the differential pressure set.

6. The valve (30) according to claim 1, wherein said valve member (4) is movable to open to a maximum flow rate position, and wherein there are provided means (9, 24, 27) to regulate said maximum flow rate position.

7. The valve (30) according to claim 6, wherein said means (9, 24, 27) to regulate the maximum flow rate position include at least one indicator (9) of the maximum flow rate position.

8. The valve (30) according to claim 6, wherein said means (9, 24, 27) to regulate the maximum flow rate position include at least one adjustable stop (27) to memorize the maximum flow rate position set for said valve member (4).

9. The valve (30) according to claim 1, wherein said valve member (4) interrupts the fluid flow between said inlet channel (1) and said outlet channel (2) when it is in said closed position.

10. The valve (30) according to claim 1, wherein said valve member (4) is movable inside a chamber (11) obtained in said body (7), and wherein at least one duct (12) obtained in the valve body (7) is provided to hydraulically connect said chamber (11) to said fluid inlet channel (1).

11. The valve (30) according to claim 1, wherein said at least one by-pass duct (20, 20', 24') includes at least one axial duct (20) inside the stem (17) of said valve member (4) and radial bores or ducts (20', 24') to hydraulically connect said axial duct to said inlet channel (1) and said chamber (11), and wherein means (24) are provided to vary the section for fluid flow through the radial bores or ducts (24') which lead into said chamber (11).

12. The valve (30) according to claim 1, wherein there are provided at least one measurement port (15) hydraulically connected to said inlet channel (1) and at least one measurement port (16) hydraulically connected to said outlet channel (2).

## Patentansprüche

1. Ventil (30) zur Steuerung des Differenzdruckes eines Fluids zwischen dem Versorgungszweig (M) und dem Abgabezweig (R) einer Vorrichtung (100), installiert in Heiz- und Kühlsystemen, umfassend einen Ventilkörper (7) mit wenigstens einem Einlasskanal (1) und wenigstens einem Auslasskanal (2) für das Fluid, getrennt durch einen Ventilsitz (3), ein Ventilelement (4), angebracht an einem Schaft (17) und beweglich zwischen wenigstens einer geöffneten Stellung, in welcher das Ventilelement (4) einen Abstand vom Ventilsitz (3) aufweist, und einer geschlossenen Stellung, in welcher das Ventilelement (4) am Ventilsitz (3) anliegt, sowie wenigstens eine Stellvorrichtung (10), angeordnet im Inneren des Ventilkörpers (7), um das Ventilelement (4) zu bewegen und die Strömungsgeschwindigkeit des Fluids durch das Ventil (30) zu variieren, um einen voreingestellten Wert des Differenzdruckes zwischen dem Versorgungszweig (M) und dem Rücklaufzweig (R) der Vorrichtung (100) konstant zu halten, **dadurch gekennzeichnet, dass** das Ventilelement (4) beweglich ist innerhalb einer in dem Körper ausgebildeten Kammer (11), sowie dadurch, dass wenigstens ein Bypasskanal (20, 20', 24'), ausgebildet im Schaft (17) des Ventilelements (4), bereitgestellt ist, um die Kammer (11) mit dem Fluid-Einlasskanal (1) hydraulisch zu verbinden.

2. Ventil (30) nach Anspruch 1, wobei die Stellvorrichtung eine elastische Membran (10) einschließt, untergebracht in einer Kammer (19) des Ventilkörpers (7) und verbunden mit dem Schaft (17) des Ventilelements (4).

3. Ventil (30) nach Anspruch 2, wobei die Membran (10) die Kammer (19) in zwei Teile (19', 19") aufteilt: einen ersten Teil (19'), welcher mit dem Auslasskanal (2) durch einen Kanal (13), ausgebildet im Inneren des Ventilkörpers (7), hydraulisch verbunden ist, und einen zweiten Teil (19"), welcher mit dem Rücklaufzweig (R) durch einen Kapillarkanal (C), welcher sich außerhalb des Ventilkörpers (7) befindet, hydraulisch verbunden ist.

4. Ventil (30) nach Anspruch 1, wobei wenigstens eine Feder (5) bereitgestellt ist, welche auf die Membran (10) wirkt, sowie Hilfsmittel (22, 22') zum Einstellen der Vorbelastung der Feder (5), um so den gewünschten Wert des Differenzdruckes zwischen dem Versorgungszweig (M) und dem Rücklaufzweig (R) der Vorrichtung (100) einzustellen.

5. Ventil (30) nach Anspruch 4, wobei die Hilfsmittel zum Einstellen der Vorbelastung der Feder (5) wenigstens eine Anzeigevorrichtung (6, 6', 6") für den Wert des eingestellten Differenzdruckes einschließen.

6. Ventil (30) nach Anspruch 1, wobei das Ventilelement (4) beweglich ist, um sich zu einer Stellung einer maximalen Strömungsgeschwindigkeit zu öffnen, und wobei Hilfsmittel (9, 24, 27) bereitgestellt sind, um die Stellung der maximalen Strömungsgeschwindigkeit einzustellen.

7. Ventil (30) nach Anspruch 6, wobei die Hilfsmittel (9, 24, 27) zum Einstellen der Stellung der maximalen Strömungsgeschwindigkeit wenigstens eine Anzeigevorrichtung (9) für die Stellung der maximalen Strömungsgeschwindigkeit einschließen.

8. Ventil (30) nach Anspruch 6, wobei die Hilfsmittel (9, 24, 27) zum Einstellen der Stellung der maximalen Strömungsgeschwindigkeit wenigstens einen verstellbaren Anschlag (27) einschließen, um die Stellung der maximalen Strömungsgeschwindigkeit, welche für das Ventilelement (4) eingestellt ist, festzuhalten.

9. Ventil (30) nach Anspruch 1, wobei das Ventilelement (4) den Strom des Fluids zwischen dem Einlasskanal (1) und dem Auslasskanal (2) unterbricht, wenn sich selbiges in der geschlossenen Stellung befindet.

10. Ventil (30) nach Anspruch 1, wobei das Ventilelement (4) beweglich ist innerhalb einer Kammer (11), ausgebildet im Körper (7), und wobei wenigstens ein Kanal (12), ausgebildet im Ventilkörper (7), bereitgestellt ist, um die Kammer (11) mit dem Fluid-Einlasskanal (1) hydraulisch zu verbinden.

11. Ventil (30) nach Anspruch 1, wobei der wenigstens eine Bypasskanal (20, 20', 24') wenigstens einen axialen Kanal (20) innerhalb des Schafts (17) des Ventilelements (4) einschließt, sowie radiale Bohrungen oder Kanäle (20', 24'), um den axialen Kanal mit dem Einlasskanal (1) und der Kammer (11) hydraulisch zu verbinden, und wobei Hilfsmittel (24) bereitgestellt sind, um den Querschnitt zu variieren für den Strom des Fluids durch die radialen Bohrungen oder Kanäle (24'), welche in die Kammer (11) hinein führen.

12. Ventil (30) nach Anspruch 1, wobei wenigstens ein Messanschluss (15), welcher mit dem Einlasskanal (1) hydraulisch verbunden ist, und wenigstens ein Messanschluss (16), welcher mit dem Auslasskanal (2) hydraulisch verbunden ist, bereitgestellt sind.

## Revendications

1. Soupape (30) destinée à commander la pression différentielle d'un fluide entre la branche d'alimentation (M) et la branche de fourniture (R) d'un appareil (100) installé dans des systèmes de chauffage et de refroidissement, comprenant un corps de soupape (7) ayant au moins un canal d'entrée (1) et au moins un canal de sortie (2) du fluide séparés par un siège de soupape (3), un élément de soupape (4) serré contre une tige (17) et mobile entre au moins une position ouverte, dans laquelle l'élément de soupape (4) se situe à une distance du siège de soupape (3), et une position fermée, dans laquelle l'élément de soupape (4) bute contre ledit siège de soupape (3), et au moins un dispositif d'actionnement (10) disposé à l'intérieur dudit corps de soupape (7) pour déplacer ledit élément de soupape (4) et varier le débit de fluide traversant la soupape (30) dans le but de maintenir constante une valeur prédéfinie de la pression différentielle entre la branche d'alimentation (M) et la branche de retour (R) dudit appareil (100), **caractérisée en ce que** ledit élément de soupape (4) est mobile à l'intérieur d'une chambre (11) obtenue dans ledit corps, et **en ce que** l'au moins un conduit de dérivation (20, 20', 24') obtenu dans la tige (17) dudit élément de soupape (4) est prévu pour relier hydrauliquement ladite chambre (11) audit canal d'entrée de fluide (1).

2. Soupape (30) selon la revendication 1, dans laquelle ledit dispositif d'actionnement comprend une membrane élastique (10) logée dans une chambre (19) dudit corps de soupape (7) et reliée à la tige (17) dudit élément de soupape (4).

3. Soupape (30) selon la revendication 2, dans laquelle ladite membrane (10) divise ladite chambre (19) en deux parties (19', 19"), une première partie (19') étant reliée hydrauliquement audit canal de sortie (2) par un conduit (13) obtenu à l'intérieur dudit corps de soupape (7) et une seconde partie (19") étant reliée hydrauliquement à la branche de retour (R) par un conduit capillaire (C) à l'extérieur dudit corps de soupape (7).

4. Soupape (30) selon la revendication 1, dans laquelle il y a au moins un ressort (5) agissant sur ladite membrane (10) et des moyens (22, 22') pour réguler la précharge dudit ressort (5) de sorte à définir la valeur souhaitée de la pression différentielle entre la branche d'alimentation (M) et la branche de retour (R) dudit appareil (100).

5. Soupape (30) selon la revendication 4, dans laquelle lesdits moyens pour réguler la précharge dudit ressort (5) comprennent au moins un indicateur (6, 6', 6") de la valeur de la pression différentielle définie.

6. Soupape (30) selon la revendication 1, dans laquelle ledit élément de soupape (4) est mobile pour s'ouvrir dans une position de débit maximum et dans laquelle il y a des moyens (9, 24, 27) pour réguler ladite position de débit maximum.

7. Soupape (30) selon la revendication 6, dans laquelle lesdits moyens (9, 24, 27) pour réguler la position de débit maximum comprennent au moins un indicateur (9) de la position de débit maximum.

8. Soupape (30) selon la revendication 6, dans laquelle lesdits moyens (9, 24, 27) pour réguler la position de débit maximum comprennent au moins une butée ajustable (27) permettant de mémoriser la position de débit maximum définie pour ledit élément de soupape (4).

9. Soupape (30) selon la revendication 1, dans laquelle ledit élément de soupape (4) interrompt le débit de fluide entre ledit canal d'entrée (1) et ledit canal de sortie (2) lorsqu'il est dans ladite position fermée.

10. Soupape (30) selon la revendication 1, dans laquelle ledit élément de soupape (4) est mobile à l'intérieur d'une chambre (11) obtenue dans ledit corps (7), et dans laquelle au moins un conduit (12) obtenu dans le corps de soupape (7) est prévu pour relier hydrauliquement ladite chambre (11) audit canal d'entrée de fluide (1) .

11. Soupape (30) selon la revendication 1, dans laquelle ledit au moins un canal de dérivation (20, 20', 24') comprend au moins un conduit axial (20) à l'intérieur de la tige (17) dudit élément de soupape (4) et des trous ou conduits radiaux (20', 24') pour relier hydrauliquement ledit conduit axial audit canal d'entrée (1) et ladite chambre (11), et dans laquelle les moyens (24) sont prévus afin de varier la section pour le débit de fluide au travers des trous ou conduits radiaux (24') qui mènent dans ladite chambre (11).

12. Soupape (30) selon la revendication 1, dans laquelle il y a au moins un orifice de mesure (15) relié hydrauliquement audit canal d'entrée (1) et au moins un orifice de mesure (16) relié hydrauliquement audit canal de sortie (2).
